# EUROPEAN PATENT APPLICATION

(11) **EP 4 149 169 A1**
(43) Date of publication of application: **15.03.2023**
(21) Application number: 21829120.1
(22) Date of filing: 26.05.2021
(51) Int. Cl.: H04W 48/16

(54) **CUSTOMER PREMISES EQUIPMENT**

(30) Priority: 23.06.2020 CN 202010582232
(71) Applicant: ZTE Corporation, Shenzhen, Guangdong 518057 (CN)
(72) Inventor: ZHANG, Yongliang, Shenzhen, Guangdong 518057 (CN)
(74) Representative: Zoli, Filippo
(86) International application number: PCT/CN2021/096057
(87) International publication number: WO 2021/258969

(57) **Abstract**

Disclosed is a customer premises equipment, comprising a digital mobile communication module (210) and a wireless local area network communication module (220). The digital mobile communication module (210) and the wireless local area network communication module (220) are detachably connected by means of a first connector (211) and a second connector (221); in the case of being connected, signal transmission is performed by means of a first internal port (241) and a second internal port (242); and in the case of being disconnected, the signal transmission is performed by means of a first external port (251) and a second external port (252).

## Description

### CROSS-REFERENCE TO RELATED APPLICATION

This application is filed on the basis of Chinese patent application No. 202010582232.8 filed on June 23, 2020, and claims priority to the Chinese patent application, the entire contents of which are incorporated herein by reference.

### TECHNICAL FIELD

Embodiments of the present disclosure relate to, but are not limited to, the technical field of information processing, and in particular, to a Customer Premises Equipment (CPE).

### BACKGROUND

A CPE is a mobile access device that receives a digital mobile communication signal and forwards the signal as a wireless Wi-Fi (a technology that allows an electronic device to be connected to a Wireless Local Area Network (WLAN)) signal. An existing CPE converts high-speed 4G and 5G digital mobile signals into Wi-Fi signals, so that a plurality of mobile terminals within a range of the Wi-Fi signals can access a mobile communication network at the same time.

At present, there are mainly two types of CPEs that access 5G digital mobile signals (including millimeter wave signals and Sub-6GHz signals): one integrates a 5G communication module and a Wi-Fi module; and the other is provided only with a 5G communication module which needs to cooperate with an additionally purchased Wi-Fi device.

The CPE that integrates the 5G communication module and the Wi-Fi module, especially provided with a millimeter wave communication module, generates heat seriously, and tends to have poor signals. For example, when such a CPE is placed outdoors, such as outside a window, indoor signal reception is unstable due to obstruction by glass or other accidental moving objects or humans; and when placed indoors, attenuation and disturbance of medium-high frequency signals are more serious.

The CPE provided only with the 5G communication module does not include the Wi-Fi module and thus needs to cooperate with a Wi-Fi device available in the market, which may often lead to problems such as compatibility and mismatch with device processing capability, affecting users' use experience.

### SUMMARY

The following is a summary of subject matters described in detail herein. The summary is not intended to limit the protection scope of the claims.

An embodiment of the present disclosure provides a Customer Premises Equipment (CPE).

The CPE according to the embodiment of the present disclosure includes: a digital mobile communication module including a first connector, a first internal link port, and a first external link port; and a Wireless Local Area Network (WLAN) communication module including a second connector, a second internal link port, and a second external link port. The digital mobile communication module and the WLAN communication module are detachably connected by means of the first connector and the second connector. The first internal link port and the second internal link port are configured to perform signal transmission in response to the digital mobile communication module and the WLAN communication module being connected to each other. The first external link port and the second external link port are configured to perform signal transmission in response to the digital mobile communication module and the WLAN communication module being disconnected from each other.

Other features and advantages of the present disclosure will be set forth in the description which follows and in part will become apparent from the description or may be learned from practice of the present disclosure. The objectives and other advantages of the present disclosure may be realized and attained by the structure particularly pointed out in the description, claims, and the accompanying drawings.

### BRIEF DESCRIPTION OF DRAWINGS

The accompanying drawings are intended to provide further understanding of the technical scheme of the present disclosure, and constitute a part of the description, which are intended to illustrate the technical scheme of the present disclosure in conjunction with embodiments of the present disclosure and do not constitute any limitation on the technical scheme of the present disclosure.
FIG. 1 is a schematic diagram of a Customer Premises Equipment (CPE) in some instances;
FIG. 2 is a schematic diagram of a CPE according to an embodiment of the present disclosure;
FIG. 3 is a schematic diagram of a CPE according to another embodiment of the present disclosure;
FIG. 4 is a schematic diagram of a CPE according to another embodiment of the present disclosure;
FIG. 5 is a schematic diagram of a CPE according to another embodiment of the present disclosure;
FIG. 6 is a schematic diagram of a CPE according to another embodiment of the present disclosure;
FIG. 7 is a schematic diagram of a CPE according to another embodiment of the present disclosure;
FIG. 8 is a schematic diagram of a CPE according to another embodiment of the present disclosure;
FIG. 9 is a flowchart of switching between internal and external link channels according to an embodiment of the present disclosure;
FIG. 10 is a schematic diagram of a CPE according to another embodiment of the present disclosure;
FIG. 11 is a schematic structural diagram of a CPE according to another embodiment of the present disclosure; and
FIG. 12 is a schematic diagram of an application scenario of a CPE according to another embodiment of the present disclosure.

### DETAILED DESCRIPTION

In order to make the objectives, technical schemes, and advantages of the present disclosure clear, the present disclosure is described in further detail below with reference to the accompanying drawings and embodiments. It should be understood that specific embodiments described herein are only used to illustrate the present disclosure and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish between similar objects, and are not necessarily used to describe a specific sequence or a precedence order. In addition, terms such as "first" and "second" are used herein for purposes of description and are not intended to indicate or imply relative importance or to imply the number of indicated technical features. Thus, the feature defined with "first" and "second" may explicitly or implicitly includes one or more of the features.

It is to be further noted that all directional indications, such as "upper", "lower", "left", "right", "front", and "rear" and the like in the embodiments of the present disclosure are merely used to illustrate a relative positional relationship, motion, and the like between components in a particular attitude (as shown in the drawings). If the particular attitude changes, the directional indication changes accordingly.

In the present disclosure, unless specified or limited otherwise, the terms "connected/coupled" or the like are to be understood in a broad sense, and may be, for example, fixed or movable connections, detachable or non-detachable connections, or integral connections; may also be mechanical connections, or electric connections or mutual communication; may also be direct connections, or indirect connections via intervening structures; may also be inner communications or interaction of two elements.

Reference throughout the description of the present disclosure to "an embodiment/implementation", "another embodiment/implementation", "some embodiments/implementations" means that a particular feature, structure, material, or characteristic described in connection with the embodiment or example are included in at least one embodiment or implementation of the present disclosure. In the present disclosure, expressions of the above terms are not necessarily referring to the same embodiments or implementations. Furthermore, the feature, structure, material, or characteristic described may be incorporated in a proper way in any one or more embodiments or implementations.

A Customer Premises Equipment (CPE) according to embodiments of the present disclosure includes a digital mobile communication module and a Wireless Local Area Network (WLAN) communication module. The digital mobile communication module includes a first connector, a first internal link port, and a first external link port. The WLAN communication module includes a second connector, a second internal link port, and a second external link port. The digital mobile communication module and the WLAN communication module are detachably connected by means of the first connector and the second connector. The first internal link port and the second internal link port are configured to perform signal transmission in a case where the digital mobile communication module and the WLAN communication module are connected to each other. The first external link port and the second external link port are configured to perform signal transmission in a case where the digital mobile communication module and the WLAN communication module are disconnected from each other. The CPE according to the embodiments of the present disclosure includes both the digital mobile communication module and the WLAN communication module which have excellent compatibility, solving the problems such as a mismatch in device processing capability and facilitating customer deployment. In addition, according to the embodiments of the present disclosure, the digital mobile communication module and the WLAN communication module have their own cavities. Dissipation of heat from power consumption of the whole equipment is not concentrated in one cavity, which is conducive to the optimization of the overall heat dissipation of the system. Meanwhile, the detachable design of the digital mobile communication module and the WLAN communication module enables application scenarios of the CPE to be more diversified, which may be integrated for indoor use in case of good indoor wireless network signal reception. Also, in case of poor indoor wireless network signal reception, the part including the digital mobile communication module is placed outdoors, and the part including the WLAN communication module is placed indoors, which solves the problem of poor signals in some scenarios and enables users to obtain better use experience.

The embodiments of the present disclosure are further elaborated below with reference to the accompanying drawings.

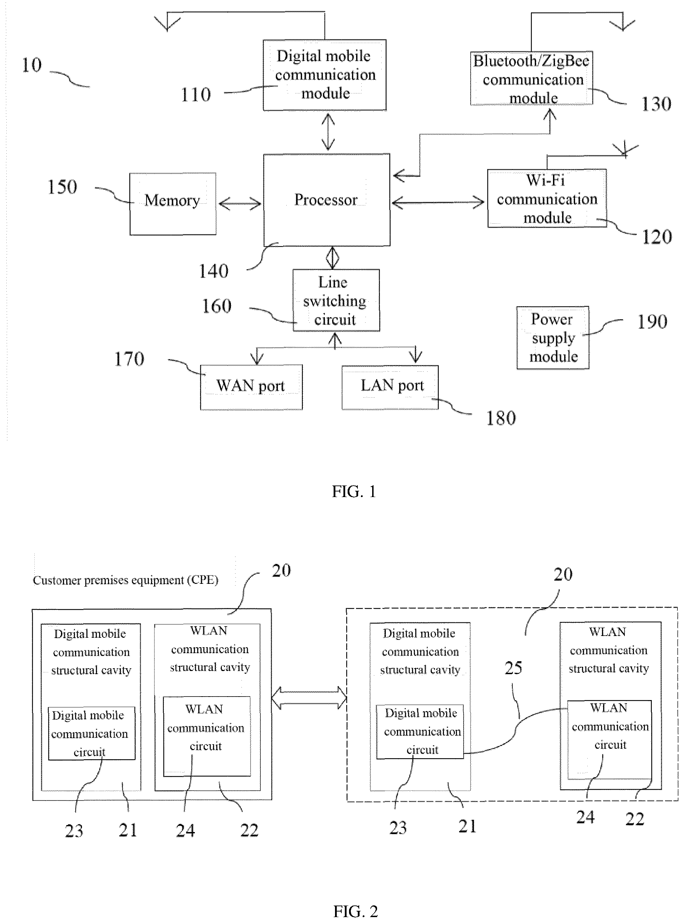

As shown in FIG. 1, an existing common CPE 10 includes a digital mobile communication module 110 and a Wi-Fi communication module 120. The digital mobile communication module 110 is generally a 2G to 5G digital mobile communication module for wireless access, which accesses a communication signal provided by a mobile operator by means of an antenna, also known as a mobile access terminal. The Wi-Fi communication module 120 provides a local wireless data access service, known as a wireless access terminal. In some examples, the CPE 10 may further include a Bluetooth/ZigBee communication module 130 to provide a short-range communication capability. Both the digital mobile communication module 110 and the Wi-Fi communication module 120 are connected to a shared processor 140 and a memory 150 for information processing, and then are switched, by means of a line switching circuit 160, to a wired Wide Area Network (WAN) port 170 and a Local Area Network (LAN) port 180, respectively for access to a WAN and/or a LAN so as to access wired communication signals, which are known as wired access terminals. A power supply module 190 is responsible for supplying power to the whole system. The CPE 10 converts an outdoor 5G signal into an indoor Wi-Fi signal for connection of non-5G mobile phones, so that a large number of existing 4G mobile phones can also use high-speed data services provided by a 5G communication network.

However, the 5G mobile communication has a demand for a user rate which is 10 to 100 times that of 4G mobile communication. For an enhanced Mobile Broadband (eMBB) service, a peak rate index required by the International Telecommunication Union (ITU) is 20 Gbit/s downlink and 10 Gbit/s uplink (a user experience rate index is 100 Mbit/s downlink and 50 Mbit/s uplink), and a latency index is less than or equal to 4 ms.

Meanwhile, the Wi-Fi technology has also been synchronously advanced to 802.11ax (also known as Wi-Fi 6), which supports frequency bands of 2.4 GHz and 5 GHz, is downward-compatible with a/b/g/n/ac, and has a maximum bandwidth of 2.4 Gbps and a maximum rate up to 9.6 Gbps. Compared with the Wi-Fi technology standard of the previous generation, Wi-Fi 6 increases a data transmission speed by 40 percent and expands the network capacity.

When transmission rates of the 5G communication module and the Wi-Fi communication module are increased simultaneously, power consumption of a processor and a radio frequency power amplifier of a wireless communication circuit that match with the 5G communication module and the Wi-Fi communication module may increase significantly, which puts forward severe requirements on heat dissipation of the CPE. However, in home or common business scenarios, a volume of the CPE is developing toward miniaturization, so that contradiction between the dissipation of heat from power consumption and the volume of the CPE is becoming more and more prominent.

To this end, an embodiment of the present disclosure provides a CPE, which is divided into two parts in structure: mobile communication and wireless communication. The mobile communication part may adopt wide-area mobile network communication technologies such as 2G to 5G, while the wireless communication part may adopt short-range wireless networking technologies such as Wi-Fi, Bluetooth, and Zigbee. The two parts can be used together or separately, which is conducive to overall heat dissipation of the CPE. For example, as shown in FIG. 2, in an embodiment of the present disclosure, a mobile communication part and a wireless communication part of a CPE 20 have respective independent casings, defining two independent structural cavities, i.e., a mobile communication structural cavity 21 and a wireless communication structural cavity 22. The two structural cavities accommodate their own circuits and components respectively. That is, the mobile communication structural cavity 21 accommodates a mobile communication circuit 23, and the wireless communication structural cavity 22 accommodates a wireless communication circuit 24. The mobile communication structural cavity 21 and the wireless communication structural cavity 22 may be integrated, for example, by means of connectors disposed on the casings (not shown in FIG. 1), or may be disassembled to be disposed at different positions. In the case of disassembly, the mobile communication circuit 23 and the wireless communication circuit 24 respectively located in the two structural cavities are connected by means of a communication cable 25. At least one communication cables 25 may be provided for connection. In some embodiments, some communication cables 25 include power lines.

In the implementation as shown in FIG. 2, dissipation of heat form power consumption of the CPE is not concentrated in one cavity, which is conducive to the optimization of the overall heat dissipation of the system. Meanwhile, more importantly, application scenarios of the CPE are more diversified. The two structural cavities may be integrated for indoor use in the case of good indoor wireless network signal reception. Also, in the case of poor indoor wireless network signal reception, the structural cavity of the mobile (e.g., 5G) communication part is placed outdoors, and the structural cavity of the wireless (e.g., Wi-Fi) communication part is placed indoors. When 5G communication adopts a Sub-6 GHz signal, in an ordinary household or commercial environment, advantages of separation of applications in low frequency bands below 3 GHz are not obvious due to strong signal penetration, while the separation can significantly improve communication performance above 3 GHz. When 5G communication adopts a millimeter wave of tens of GHz, the separation of applications makes stable communication more secure since the millimeter wave is susceptible to disturbance and has poor penetration. In addition, Separation of applications is also necessary for a CPE adopting 4G communication in environments with extremely bad mobile communication signals such as thick concrete rooms without a window and basements.

In view of a circuit system of the mobile communication part and the wireless communication part in FIG. 2, there may be multiple implementations.

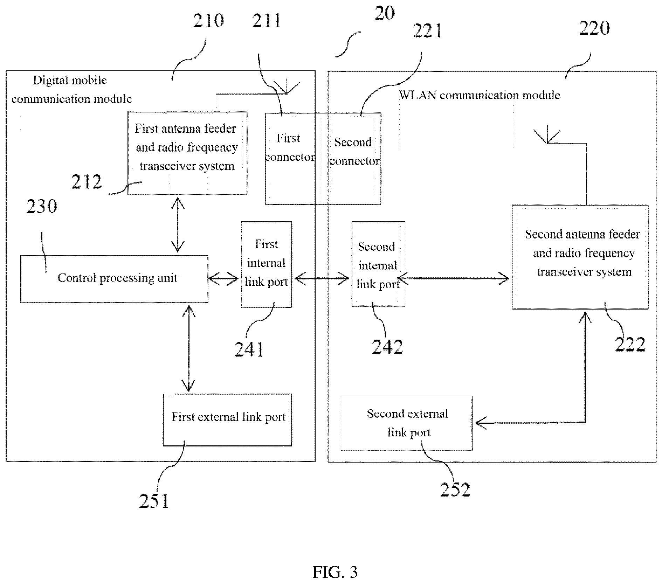

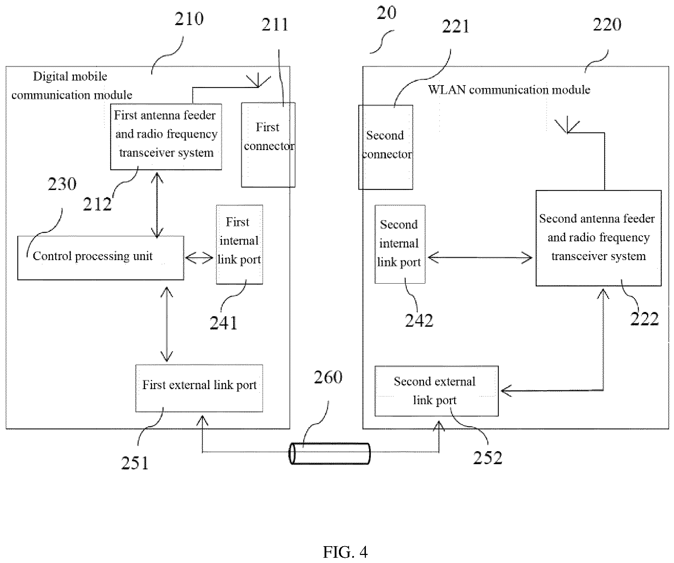

As shown in FIG. 3 and FIG. 4, in some embodiments of the present disclosure, the CPE 20 includes a digital mobile communication module 210, a WLAN communication module 220, and a control processing unit 230. In this embodiment, the digital mobile communication module 210 and the WLAN communication module 220 share the control processing unit 230. The CPE 20 further includes unshared antenna feeder and radio frequency transceiver modules, that is, a first antenna feeder and radio frequency transceiver module 211 dedicated to the digital mobile communication module 210 and a second antenna feeder and radio frequency transceiver module 221 dedicated to the WLAN communication module 220, to modulate, transmit and receive wireless signals. In addition, the digital mobile communication module 210 further includes a first connector 211, and the second WLAN communication module 220 further includes a second connector 221. The first connector 211 is connected to the second connector 221 in a fitting manner to combine the digital mobile communication module 210 and the WLAN communication module 220 into an integral module, which is referred to as integral operating state (see FIG. 3), and is in contrast to a separate operating state in which the first connector 211 is not connected to the second connector 221 (see FIG. 4). Since the digital mobile communication module 210 and the WLAN communication module 220 share the control processing unit 230, the problems of compatibility and mismatch of the processing capability do not exist.

The connection between the digital mobile communication module 210 and the WLAN communication module 220 is realized by means of different port pairs in different operating states. For example, in the embodiment shown in FIG. 3 where the digital mobile communication module 210 and the WLAN communication module 220 are combined into an integral module for operation, a first internal link port 241 and a second internal link port 242 are directly connected for signal transmission. In the embodiment shown in FIG. 4 where the digital mobile communication module 210 and the WLAN communication module 220 are separated for operation, a first external link port 251 and a second external link port 252 are configured to perform signal transmission. In the separate operating state, the first external link port 251 and the second external link port 252 located in different modules need to be interconnected by means of a communication cable 260.

In some embodiments of the present disclosure, the digital mobile communication module 210 is at least one of second-generation (2G), third-generation (3G), fourth-generation (4G), or fifth-generation (5G) digital mobile communication modules. The WLAN communication module 220 is at least one of a Wi-Fi communication module, a Bluetooth communication module, or a Zigbee communication module.

The control processing unit 230 shared by the digital mobile communication module 210 and the WLAN communication module 220 is disposed in either the digital mobile communication module 210 or the WLAN communication module 220. In the embodiments shown in FIG. 3 and FIG. 4, the digital mobile communication module 210 involves a radio frequency transceiver computing task, which is much more complex, needs higher integrity of signal processing and needs to be close to a storage computing system. Therefore, the shared control processing unit 230 is disposed in the digital mobile communication module 210, and in different operating states of the CPE 20, is connected to the WLAN communication module 220 respectively by means of the first internal link port 241/second internal link port 242, or the first external link port 251/second external link port 252 and the communication cable 260. Certainly, in other embodiments, the control processing unit 230 may also be disposed in the WLAN communication module 220, and connected to the digital mobile communication module 210 also by means of the first internal link port 241/second internal link port 242, or the first external link port 251/second external link port 252 and the communication cable 260 to realize data communication.

In the embodiment shown in FIG. 3, in the integrated application, the digital mobile communication module 210 and the WLAN communication module 220 communicate by means of the first internal link port 241/second internal link port 242. The first internal link port 241 and the second internal link port 242 adopt board-to-board connectors and are directly buckled together in the integrated application to realize the communication connection between the digital mobile communication module 210 and the WLAN communication module 220. In the embodiment shown in FIG. 4, in the separate application, the digital mobile communication module 210 and the WLAN communication module 220 communicate by means of the first external link port 251/second external link port 252 and the communication cable 260. The first external link port 251/second external link port 252 adopts a connector with electromagnetic shielding performance, and the communication cable 260 connected between the two external link ports also has electromagnetic shielding performance.

In some embodiments of the present disclosure, for ease of description, the digital mobile communication module and the WLAN communication module may be replaced with a 5G communication module and a Wi-Fi communication module respectively. It is to be understood that this is for illustrative purposes only and is not intended to be limiting. In addition, in some drawings of the present disclosure, for ease of description, icons representing the connection between the first internal link port 241 and the second internal link port 242 and the connection between the first external link port 251 and the second external link port 252 (and the communication cable 260) may appear simultaneously. It is to be understood that this does not mean that the two connections have to exist at the same time, and they may also exist alternatively.

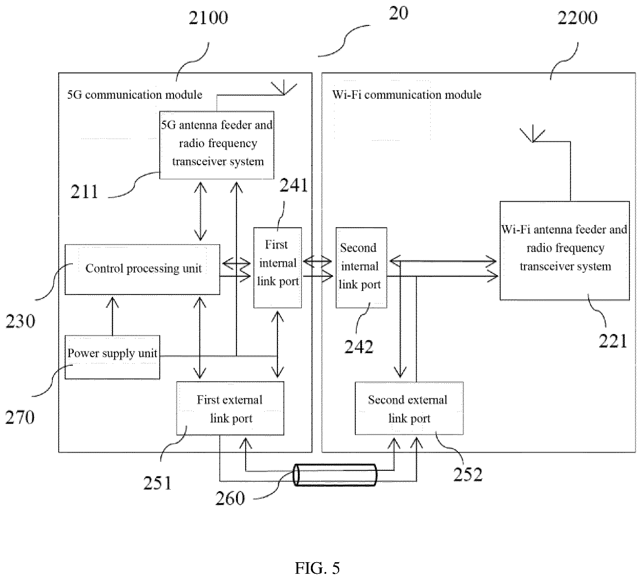

As shown in FIG. 5, the CPE 20 further includes a shared power supply module 270. Similar to the control processing unit 230, the power supply module 270 may be disposed in either a 5G communication module 2100 or a Wi-Fi communication module 2200. In an embodiment shown in FIG. 5, the power supply module 270 is disposed in the 5G communication module 2100, and provides, by means of the first external link port 251/second external link port 252 or the first external link port 251/second external link port 252 and the communication cable 260, power for the Wi-Fi communication module 2200 to operate. In this embodiment, the communication cable 260 includes data, power supply, and control signals.

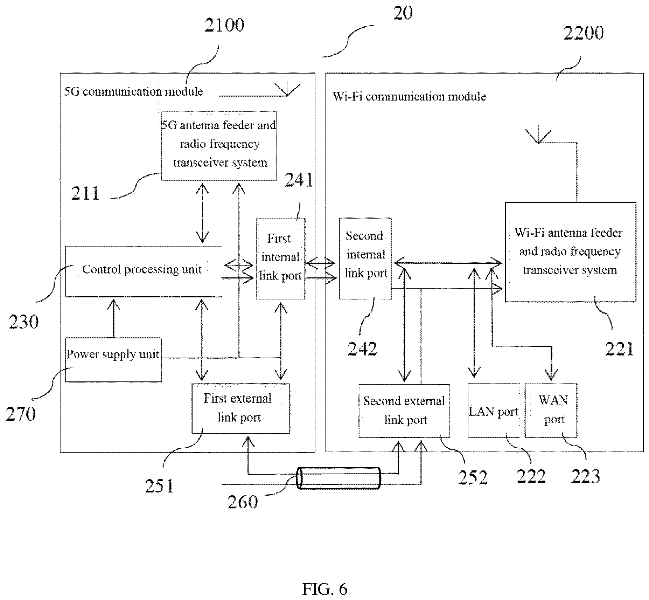

As shown in FIG. 6, the CPE 20 further includes a LAN port 222 and/or a WAN port 223 to realize wired WAN and LAN connections. In this embodiment, considering that the Wi-Fi communication part is generally placed indoors, the WAN port 2223 and the LAN port 222 are disposed in the Wi-Fi communication module 2200, and are connected with the control processing unit 230 by means of the internal link port 240 or the external link port 250. Certainly, the WAN port 2223 and the LAN port 222 may also be disposed in the 5G communication module 2100.

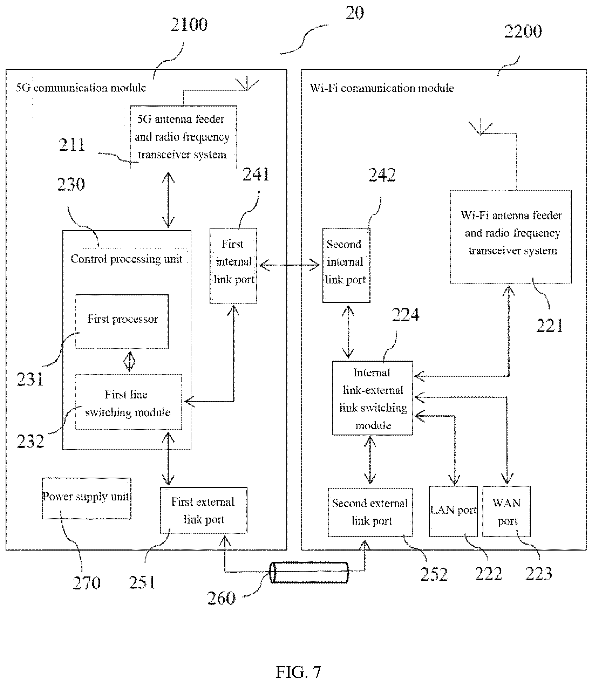

In another embodiment of the present disclosure, as shown in FIG. 7, the CPE 20 includes a 5G communication module 2100 and a Wi-Fi communication module 2200. The 5G communication module 2100 includes a first internal link port 241, a first external link port 251, a control processing unit 230, a power supply unit 270, and a 5G antenna feeder and radio frequency transceiver system 211. The Wi-Fi communication module 2200 includes a second internal link port 242, a second external link port 252, a Wi-Fi antenna feeder and radio frequency transceiver system 221, a LAN port 222, and a WAN port 223. Processors of the 5G communication module 2100 and the Wi-Fi communication module 2200 share the control processing unit 230 and the power supply unit 270. In the embodiment shown in FIG. 7, the control processing unit 230 is disposed in the 5G communication module 2100, and includes a first processor 231 and a first line switching module 232. The first processor 231 is electrically connected to the first line switching module 232. The first line switching module 232 is configured to gate the first processor 231 and the first internal link port 241 or gate the first processor 231 and the first external link port 251. Correspondingly, the Wi-Fi communication module 2200 further includes an internal link-external link switching module 224, which correspondingly gates the second internal link port 242 or the second external link port 252.

Similarly, in an embodiment where the control processing unit 230 is disposed in the Wi-Fi communication module, the control processing unit 230 includes a second processor and a second line switching module (not shown in the figure). The second processor is electrically connected to the second line switching module, and the second line switching module is configured to gate the second processor and the second internal link port 242 or gate the second processor and the second external link port 252.

It is to be noted that the internal link port 240 and the external link port 250 may be used simultaneously or alternatively. Dedicated communication cables 270 (in addition to communication signals, the cable also includes power and control signals) of different lengths are required for the integrated application and separate application. However, cables of different lengths have different impedances. To prevent complex impedance matching and simplify circuit design, in some embodiments of the present disclosure, the internal link port 240 and the external link port 250 are used alternatively.

In an embodiment, the 5G communication module 2100 and the Wi-Fi communication module 2200 are interconnected by means of the first internal link port 241/second internal link port 242 and the first external link port 251/second external link port 252 in scenarios of integrated application and separate application, respectively. Since internal link and external link channels have different paths, high-speed communication signals have different impedance matching. Therefore, the internal link channel and the external link channel are associated with different communication interfaces on the processor. Meanwhile, the processor also needs to control line switching to realize switching of communication signals of the internal link and external link channels. For example, in the embodiment shown in FIG. 7, the first line switching module 232 of the 5G communication module 2100 and the internal link-external link switching module 224 of the Wi-Fi communication module 2200 are responsible for line switching of such signals. The first processor 231 controls the first line switching module 232 to cause a signal to go through the internal or external link port, and the internal link-external link switching module 224 of the Wi-Fi communication module 2200 makes corresponding adjustment to open a corresponding port to constitute the internal link or external link channel connecting the 5G communication module 2100 and the Wi-Fi communication module 2200.

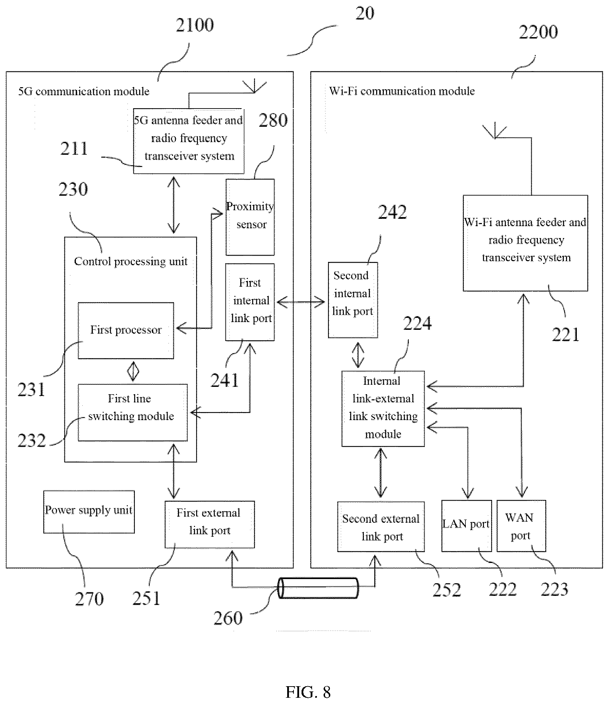

The switching of the communication signals of the internal link and external link channels involves controlling different communication interfaces and the internal link-external link switching module on system program software according to a switching scenario. For example, a source end of the control may be triggered by configuring a proximity sensor 280 near the first internal link port 241. In an embodiment of the present disclosure, as shown in FIG. 8, the 5G communication module 2100 includes the proximity sensor 280 which is disposed near the first internal link port 241 and connected to the first processor 231 of the control processing unit 230, and provides a proximity signal when the Wi-Fi communication module 2200 approaches (for example, the first internal link port 241 and the second internal link port 242 of the two are snap-fitted).

In another embodiment of the present disclosure, in a case where the control processing unit 230 is included in the Wi-Fi communication module 2200, the proximity sensor 280 may also be disposed on the Wi-Fi communication module 2200.

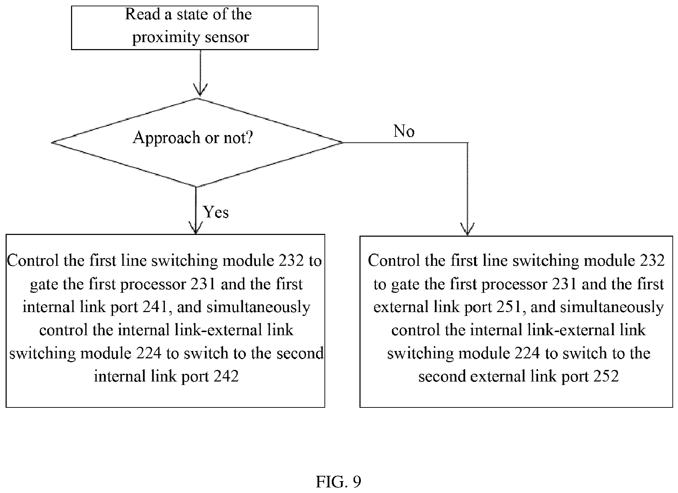

As shown in the flowchart of FIG. 9, the first processor 231 reads a state of the proximity sensor 280, determines whether the Wi-Fi communication module 2200 approaches, and controls the CPE to switch between the internal link and external link channels according to a determination result. In the case of integrated operation, proximity sensing is enabled, the first processor 231 reads the state of the proximity sensor 280, controls the first line switching module 232 to gate the first processor 231 and the first internal link port 241, and also controls the internal link-external link switching module 224 to switch to the second internal link port 242, that is, controls the equipment to switch to an internal link channel enabled state. In the case of separate operation, proximity sensing is disabled, the first processor 231 reads the state of the proximity sensor 280, controls the first line switching module 232 to gate the first processor 231 and the first external link port 251, and also controls the internal link-external link switching module 224 to switch to the second external link port 252, that is, controls the CPE to switch to an external link channel enabled state. In an embodiment of the present disclosure, the proximity sensor 280 is an ambient light sensor or a Hall device sensor.

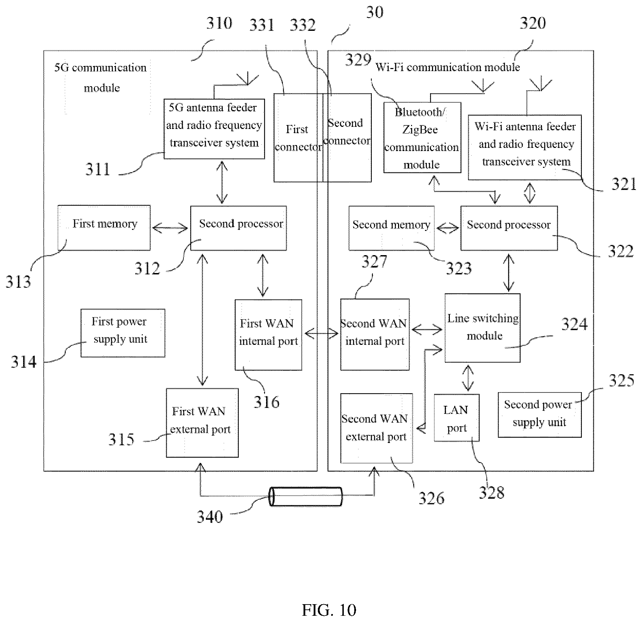

FIG. 10 illustrates another embodiment of the present disclosure, which differs from the above embodiment in that the digital mobile communication module and the WLAN communication module have respective independent control processing units and power supply units, and are interconnected by means of a standard RJ-45 network cable interface.

In the embodiment shown in FIG. 10, a CPE 30 includes a 5G communication module 310 and a Wi-Fi communication module 320. The 5G communication module 310 includes a 5G antenna feeder and radio frequency transceiver module 311, a first processor 312, a second memory 313, a power supply module 314, a first WAN external port 315, and a first WAN internal port 316. The processor 312 processes a mobile communication signal from the 5G communication module 310 into a wired signal that can be externally connected to the first WAN external port 315, or the first WAN internal port 316. The first WAN external port 315 is a standard RJ-45 interface, and realizes signal transmission by means of an external standard RJ-45 interface network cable. The first WAN internal port 316 may adopt a board-to-board connector. The Wi-Fi communication module 320 includes a Wi-Fi antenna feeder and radio frequency transceiver module 321, a second processor 322, a second memory 323, a line switching circuit 324, a power supply module 325, a second WAN external port 326, and a second WAN internal port 327. In some embodiments, the Wi-Fi communication module 320 may further include a LAN port 328, a Bluetooth/Zigbee 329, and the like. The line switching circuit 324 switches a Wi-Fi wireless signal processed by the second processor 322 to a wired signal of the second WAN external port 326 or the second WAN internal port 327. The second WAN internal port 327 is configured for internal link between the 5G communication module 310 and the Wi-Fi communication module 320. In other words, the second WAN internal port 316 and the second WAN internal port 327 here are the first internal link port and the second internal link port described above respectively. In this embodiment, corresponding to the first WAN internal port 316 of the 5G communication module 310 that takes the form of a board-to-board connector, the second WAN internal port 327 adopts a board-to-board connector paired with the second WAN internal port 327. For example, the first WAN internal port 316 adopts a male port, while the second WAN internal port 327 may adopt a female port, both of which are used in pairs. Similarly, the second WAN external port 326 adopts a standard RJ-45 interface, and is connected with the first WAN external port 315 of the 5G communication module 310 by means of an external standard RJ-45 interface network cable 340. The second WAN external port 326 may also be externally connected to another WAN device. In other words, the first WAN external port 315 and the second WAN external port 326 here are the first external link port and the second external link port described above respectively.

The 5G communication module 310 and the Wi-Fi communication module 320 of the CPE 30 are respectively disposed in cavities formed by independent casings, and provided with DC voltages by respective power supply units. The two independent casings each have an outer structural surface, and when the 5G communication module 310 and the Wi-Fi communication module 320 are integrated, the outer structural surfaces are tightly fitted together by means of fastening structural members (a first connector 331 and a second connector 332), and at the same time, the board-to-board connectors (the first WAN internal port 316 and the second WAN internal port 327) designed to connect the two are buckled and remained tightly engaged, so as to realize reliable communication between the 5G communication part and the Wi-Fi communication part. When separated, the 5G communication module 310 and the Wi-Fi communication module 320 are in communication connection by means of a network cable 340 between the first WAN external port 315 and the second WAN external port 326, so that in the case of poor indoor 5G network signal reception, the part including the 5G communication module 310 may be placed outdoors and the part including the Wi-Fi communication module 320 is placed indoors to provide better user experience.

In general, the CPE according to the embodiments of the present disclosure is particularly applicable to application scenarios where an outdoor 5G signal needs to be converted into an indoor Wi-Fi signal at household or business occasions.

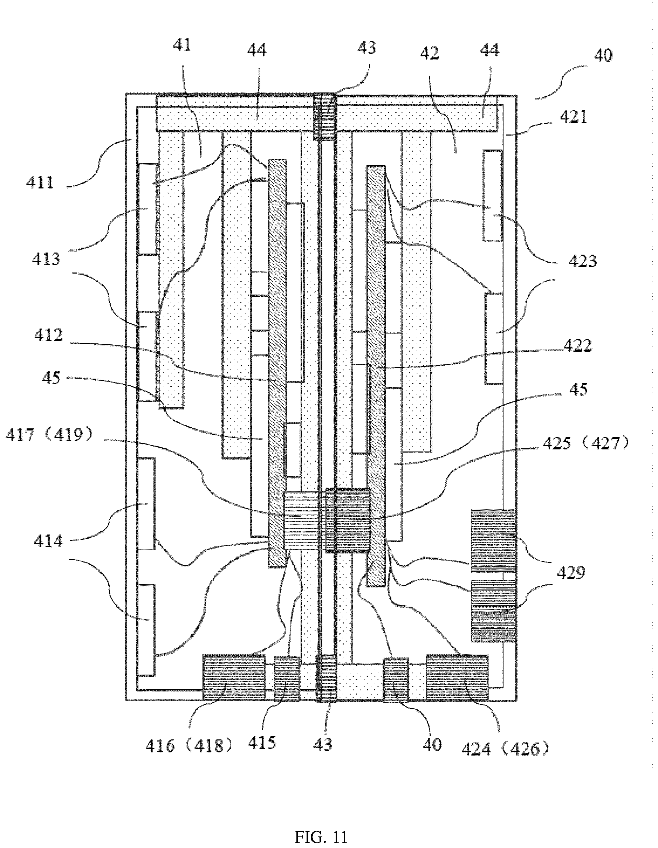

A detachable fastening structure is needed whether a shared control computing unit or an independent control computing unit is adopted. FIG. 11 is a structural sectional view of a CPE 40 according to an embodiment of the present disclosure, including a 5G communication part 41 on the left and a Wi-Fi communication part 42 on the right. The two parts are both independent structures, are buckled together by means of fastening structural members 43 (the first connector and the second connector described above) into an integral part, and may be used in the same way as a current common single CPE: hanging outside a window, in a corner, or directly in an indoor scenario (obstacles have limited effects on signal attenuation). The fastening structural member 43 may be a fastening structural member that can be disassembled or is detachable, such as a buckle or a screw.

As shown in FIG. 11, the 5G communication part 41 has a casing 411, which may be made of plastic. A cavity that accommodates a relevant circuit is formed in the casing 411. A 5G communication part mainboard 412, a millimeter wave antenna module 413, a Sub 6GHz antenna 414, and a power port 415 are disposed in the cavity. In an embodiment of a shared control processing unit, the 5G communication part 41 further includes a first external link port 416 and a first internal link port 417. In an embodiment of independent control processing units, the 5G communication part 41 further includes a first WAN external port 418 and a first WAN internal port 419. Similarly, the Wi-Fi communication part 42 also has a casing 421, which may also be made of plastic. A cavity that accommodates a relevant circuit is formed in the casing 421. A Wi-Fi communication part mainboard 422 and a Wi-Fi antenna 423 are disposed in the cavity of the casing 421. Correspondingly, in the embodiment of the shared control processing unit, the Wi-Fi communication part 41 further includes a second external link port 424 and a second internal link port 425. In the embodiment of the independent control processing units, the Wi-Fi communication part 41 further includes a second WAN external port 426, a second WAN internal port 427, and a second power port 428. In addition, the CPE 40 further includes a metal heat radiator 44 and a shielding member 45 which are both provided in two cavities. In some examples, the CPE 40 further includes a LAN port 429 disposed in the Wi-Fi communication part 52. Operating principles and connection relationships of the above components have been described above or are well-known, and will not be described herein again.

In the embodiment shown in FIG. 11, for the Sub 6GHz antenna 414 of the 5G communication part 41 of the CPE, a Sub 6GHz frequency band is generally implemented in a 2T4R (2 Transmit 4 Receive) mode, and power consumption of a radio frequency circuit is larger than that in a 4G LTE main diversity antenna transceiver mode. In the case of millimeter wave communication, the power consumption increases more significantly. Since the millimeter wave is generally presented as an active antenna module, the millimeter wave antenna module 414 includes an antenna array panel, a radio frequency circuit, and a power supply (not shown). The radio frequency circuit is configured for conversion from high-frequency to medium frequency. A signal is sent to the 5G communication part mainboard 412 by means of a low loss shielding line.

Currently, to support 802.11b/g/n/ac/ax and be featured with 4x4 MU-MIMO (which may be presented in a form of an external antenna array), the Wi-Fi communication part of the CPE has considerable power when a coverage index is generally 200 m and a transmission power is 23 dBm (a higher power, such as 26 dBm, is allowable in some scenarios).

Generally, a power difference exists between an outdoor type CPE and an indoor type CPE. To sum up, the overall power of the CPE according to the embodiments of the present disclosure can be controlled within a range of the indoor type.

Under a current trend of miniaturization of the CPE, when the 5G communication module and the Wi-Fi communication module operate in the same structural cavity, power consumption and heating effects in the case of simultaneous operation may be doubled. Therefore, according to the embodiments of the present disclosure, two structural cavities for accommodating the 5G communication module and the Wi-Fi communication module respectively are provided independently, each cavity can directly transfer heat from a heat source device of a circuit board to the metal heat radiator 44 through heat conduction (heat of the radio frequency circuit of the millimeter wave antenna module 414 is also directly transferred and dissipated by abutting against the metal heat radiator 44), the metal heat radiator 44 inside is directly connected to the metal heat radiator 44 exposed to the air, metal fins may be added to an outer surface of the metal heat radiator 44 to effectively expand a heat dissipation area. Thus, heat from each individual cavity can escape directly from a nearby location, which effectively prevents problems of heat concentration and superimposition and corresponding increase in heat dissipation treatment difficulty as in the case where the 5G communication module and the Wi-Fi communication module share the same structural cavity. In fact, if the 5G communication module and the Wi-Fi communication module share a structural cavity, a volume of the cavity and a volume of the heat radiator often need to be increased since it is difficult to address the problem of heat dissipation, which means that the overall space is not more saved than two independent structural cavities.

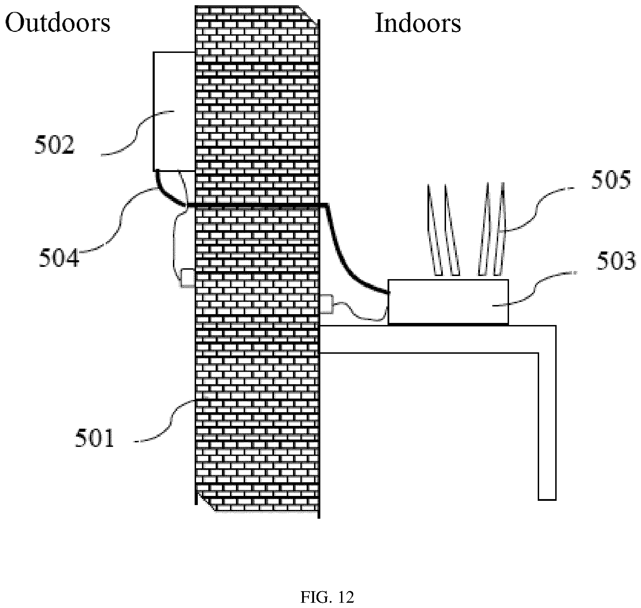

On the other hand, since the CPE according to the embodiments of the present disclosure can be separated into two independent units, a 5G communication part and a Wi-Fi communication part. When an obstacle is encountered on a wireless transmission path and large attenuation occurs, for example, in a typical scenario as shown in FIG. 12 where wireless signals are greatly attenuated due to blocking by a wall 501 between indoors and outdoors, a 5G communication part 502 may be directly placed outside the wall 501, and a Wi-Fi communication part 503 may be placed inside the wall 501, which are connected (via an external link port or a WAN external port) by means of a cable (a dedicated communication cable or a network cable) passing through the wall 501. Thus, a 5G source signal received by the outdoor-placed 5G communication part 502 of the CPE is transmitted to the Wi-Fi communication part 503 in an almost lossless wired manner and converted into an indoor wireless source via a Wi-Fi external antenna array 505, thereby effectively preventing limited performance of a current generic CPE integrating a 5G communication part and a Wi-Fi communication part in this application scenario. Meanwhile, in the embodiments of the present disclosure, joint debugging performance of the 5G communication part 502 and the Wi-Fi communication part 503 of the CPE is guaranteed, which can also prevent poor adaptation occurring when different types of Wi-Fi routers indoors are connected, through network cables, with some current CPEs having only a 5G communication part 502 that are hung outdoors in the same application scenario. In particular, many indoor user Wi-Fi routers are not configured with Wi-Fi 6, which cannot effectively convert 5G communication signals into large-capacity and high-speed Wi-Fi signals.

The CPE according to the embodiments of the present disclosure includes both the digital mobile communication module and the WLAN communication module with excellent compatibility therebetween, which can solve the problems such as mismatch of device processing capability and facilitate customer deployment. In addition, the digital mobile communication module and the WLAN communication module are detachably connected by means of the first connector and the second connector. Therefore, the separation of the digital mobile communication module from the WLAN communication module is conducive to optimization of overall heat dissipation of the system. Meanwhile, the detachable design of the digital mobile communication module and the WLAN communication module diversifies the application scenarios of the CPE. For example, the digital mobile communication module and the WLAN communication module may be integrated for indoor use in the case of good indoor wireless network signal reception. Also, in the case of poor indoor wireless network signal reception, the part including the digital mobile communication module may be placed outdoors, and the part including the WLAN communication module may be placed indoors to solve the problem of poor signal reception in some scenarios and increase the communication performance significantly, enabling users to obtain better use experience.

The CPE according to the embodiments of the present disclosure solves the problems such as compatibility and mismatch of device processing capability. The detachable design is conducive to optimization of overall heat dissipation of the system and diversifies application scenarios of the CPE, and the communication performance is significantly improved.

The above are specific description of some implementations of the present disclosure. However, the present disclosure is not limited thereto. Those having ordinary skills in the art may also make a variety of equivalent variations or replacements without departing from the scope of the present disclosure, all of which fall within the scope defined in the claims of the present disclosure.

## Claims

1. A customer premises equipment, comprising:
a digital mobile communication module comprising a first connector, a first internal link port, and a first external link port; and
a Wireless Local Area Network, WLAN, communication module comprising a second connector, a second internal link port, and a second external link port;
wherein the digital mobile communication module and the WLAN communication module are detachably connected by means of the first connector and the second connector;
the first internal link port and the second internal link port are configured to perform signal transmission in response to the digital mobile communication module and the WLAN communication module being connected to each other; and
the first external link port and the second external link port are configured to perform signal transmission in response to the digital mobile communication module and the WLAN communication module being disconnected from each other.

2. The customer premises equipment of claim 1, further comprising:
a control processing unit disposed in at least one of the digital mobile communication module or the WLAN communication module.

3. The customer premises equipment of claim 1, further comprising:
a power supply unit disposed in at least one of the digital mobile communication module or the WLAN communication module.

4. The customer premises equipment of claim 3, wherein the first internal link port, the second internal link port, the first external link port, and the second external link port are further configured to perform power transmission.

5. The customer premises equipment of claim 1, wherein the first internal link port and the second internal link port are paired board-to-board connectors.

6. The customer premises equipment of claim 1, wherein the first external link port and the second external link port are configured to be connected with a communication cable.

7. The customer premises equipment of claim 1, wherein the first internal link port, the second internal link port, the first external link port, and the second external link port are all Wide Area Network, WAN, ports.

8. The customer premises equipment of claim 2, wherein, in response to the control processing unit being disposed in the digital mobile communication module, the control processing unit comprises a first processor and a first line switching module, the first processor is electrically connected to the first line switching module, and the first line switching module is configured to gate the first processor and the first internal link port or gate the first processor and the first external link port.

9. The customer premises equipment of claim 2, wherein, in response to the control processing unit being disposed in the WLAN communication module, the control processing unit comprises a second processor and a second line switching module, the second processor is electrically connected to the second line switching module, and the second line switching module is configured to gate the second processor and the second internal link port or gate the second processor and the second external link port.

10. The customer premises equipment of claim 1, further comprising:
a proximity sensor disposed in at least one of the digital mobile communication module or the WLAN communication module, wherein the proximity sensor is configured to detect an operating mode of at least one of the digital mobile communication module or the WLAN communication module.
